# EUROPÄISCHE PATENTSCHRIFT

(11) **EP 2 828 724 B1**
(45) Veröffentlichungstag und Bekanntmachung des Hinweises auf die Patenterteilung: **03.02.2016**
(21) Anmeldenummer: 12795733.0
(22) Anmeldetag: 23.11.2012
(51) Int. Cl.: G06F 3/01, B60K 37/06, G02B 27/01

(54) **VERFAHREN ZUR BEDIENUNG EINER BEDIENVORRICHTUNG EINES KRAFTFAHRZEUGS**
METHOD FOR OPERATING AN OPERATING DEVICE OF A MOTOR VEHICLE
PROCÉDÉ D'UTILISATION D'UN DISPOSITIF DE COMMANDE D'UN VÉHICULE À MOTEUR

(30) Priorität: 23.03.2012 DE 102012005886
(43) Veröffentlichungstag der Anmeldung: 28.01.2015
(73) Patentinhaber: Audi AG, 85045 Ingolstadt (DE)
(72) Erfinder: KÜHNE, Marcus, 85051 Ingolstadt (DE); MÜLLER, Ulrich, 85055 Ingolstadt (DE)
(74) Vertreter: Brandt, Kai
(86) Internationale Anmeldenummer: PCT/EP2012/004845
(87) Internationale Veröffentlichungsnummer: WO 2013/139358

(56) Entgegenhaltungen:
- DE-A1-102007 049 710
- DE-A1-102009 034 068
- DE-A1-102009 034 069
- US-A1- 2011 029 918
- US-A1- 2011 050 589

## Beschreibung

Die Erfindung betrifft ein Verfahren zur Bedienung einer Bedienvorrichtung eines Kraftfahrzeugs nach dem Oberbegriff des Patentanspruchs 1. Ein derartiges Verfahren ist aus der DE 10 2009 034 069 A1 Ein weiteres ähnliches Verfahren zeigt die DE 10 2009 034 068 A1.

Bei dem gattungsgemäßen Verfahren wird mittels einer Blickerfassung überprüft, ob die Blickrichtung eines Bedieners während eines Eingabebefehls für die Bedienvorrichtung auf eine Anzeigeeinheit gerichtet wird. Sollte die Blickrichtung während des Eingabebefehls nicht auf die Anzeigeeinheit gerichtet sein, wird der Eingabebefehl nicht ausgeführt.

Aufgabe der Erfindung ist es, ein derartiges Bedienverfahren in Hinblick auf die Bedienung zu vereinfachen und die Verkehrssicherheit zu verbessern.

Diese Aufgabe wird durch die Merkmale des Patentanspruchs 1 gelöst. Vorteilhafte Ausgestaltungen und Weiterbildungen sind den Unteransprüchen zu entnehmen.

Gemäß des erfindungsgemäßen Verfahrens zur Bedienung einer Bedienvorrichtung eines Kraftfahrzeugs werden zwei Gruppen von Eingabebefehlen in Abhängigkeit des Erfordernisses der Blickerfassung definiert, wobei bei der ersten Gruppe von Eingabebefehlen der Eingabebefehl nur dann ausgeführt wird, wenn der Blick des Bedieners während des Eingabebefehls für eine gewisse Zeitspanne auf die mindestens eine Anzeigeeinheit gerichtet wird, wohingegen bei der zweiten Gruppe von Eingabebefehlen der Eingabebefehl unabhängig von der Blickerfassung ausgeführt wird. Durch ein derartiges Verfahren wird die Bedienung der Bedienvorrichtung vereinfacht, da der Bediener bei der zweiten Gruppe von Eingabebefehlen zur Vorgabe dieser Eingabebefehle nicht zwangsweise seinen Blick auf eine Anzeigeeinheit richten muss. Des Weiteren wird die Verkehrssicherheit erhöht, da der Bediener, der in aller Regel der Fahrer des Kraftfahrzeugs ist, seinen Blick nicht von der Straße nehmen muss, wenn er einen Eingabebefehl aus der zweiten Gruppe der Eingabebefehle vorgibt.

In einer vorteilhaften Weiterbildung des erfindungsgemäßen Verfahrens wird der Eingabebefehl aus der ersten Gruppe von Eingabebefehlen nur dann ausgeführt, wenn der Bediener während des Eingabebefehls für eine Zeitspanne von 1 Sekunde bis 10 Sekunden auf die mindestens eine Anzeigeeinheit blickt. Durch eine derartige Ausgestaltung wird sichergestellt, dass es nicht zu einem ungewollten Eingabebefehl kommt, falls der Blick des Bedieners über die mindestens eine Anzeigeeinheit schweift, während er zufällig einen Eingabebefehl vorgibt (bspw. durch zufälliges Berühren eines Bedienelements).

Gemäß der Erfindung werden die Eingabebefehle mittels Gesten vorgegeben. Hierdurch kann die Anzahl an Bedienelementen in einem Fahrzeug deutlich reduziert werden, was wiederum zur Verbesserung der Verkehrssicherheit führt, da der Bediener nicht erst das betreffende Bedienelement suchen muss und somit seinen Blick auf den Verkehr richten kann.

Im Rahmen einer weiteren Ausgestaltung ist vorgesehen, dass mit der zweiten Gruppe von Eingabebefehlen ein Multimediasystem und/oder eine Klimaanlage des Kraftfahrzeugs bedient wird, da diese in aller Regel weniger komplexe Eingabebefehle erfordern als beispielsweise ein Navigationssystem. Derartige Eingabebefehle können beispielsweise Lautstärkenregelung für ein Multimediasystem, Wechseln eines Radiosenders oder Temperaturregelung einer Klimaanlage sein. Durch diese Ausgestaltung wird sichergestellt, dass die weniger komplexen Eingabebefehle keinen Blick auf die Anzeigeeinheit erfordern, was der Verkehrssicherheit Rechnung trägt.

## Patentansprüche

1. Verfahren zur Bedienung einer Bedienvorrichtung eines Kraftfahrzeugs mit mindestens einer Anzeigeeinheit zur Darstellung veränderlicher Informationen, wobei mittels einer Blickerfassung überprüft wird, ob der Blick des Bedieners auf die mindestens eine Anzeigeeinheit gerichtet wird, und wobei ein Eingabebefehl bei einer ersten Gruppe von Eingabebefehlen nicht ausgeführt wird, wenn der Blick des Bedieners nicht für eine gewisse Zeitspanne während des Eingabebefehls auf die mindestens eine Anzeigeeinheit gerichtet wird, und wobei bei einer zweiten Gruppe von Eingabebefehlen der Eingabebefehl unabhängig von der Blickerfassung ausgeführt wird, **dadurch gekennzeichnet, dass** die Eingabebefehle mittels Gesten vorgegeben werden.

2. Verfahren nach Anspruch 1, **dadurch gekennzeichnet, dass** die Zeitspanne während des Eingabebefehls aus der ersten Gruppe von Eingabebefehlen im Bereich von 1 Sekunde bis 10 Sekunden liegt.

3. Verfahren nach einem der vorhergehenden Ansprüche, **dadurch gekennzeichnet, dass** mit der zweiten Gruppe von Eingabebefehlen ein Multimediasystem und/oder eine Klimaanlage bedient wird.

4. Verfahren nach Anspruch 3, **dadurch gekennzeichnet, dass** die zweite Gruppe von Eingabebefehlen aus Eingabebefehlen wie Lautstärkenregelung für ein Multimediasystem, Wechseln eines Radiosenders oder Temperaturregelung einer Klimaanlage gebildet werden.

## Claims

1. Method for operating an operating device of a motor vehicle comprising at least one display unit for displaying variable information, wherein gaze detection is performed to determine whether the gaze of the operator is directed towards the least one display unit, and wherein an input command from a first group of input commands is not executed if the gaze of the operator is not directed towards the at least one display unit for a specific time period of the input command, and wherein for a second group of input commands the input command is performed independently of the gaze detection, **characterised in that** the input commands are given by means of gestures.

2. Method according to claim 1, **characterised in that** the time period of the input command from the first group of input commands is in a range of 1 second to 10 seconds.

3. Method according to any one of the preceding claims, **characterised in that** a multimedia system and/or an air-conditioning system is operated by the second group of input commands.

4. Method according to claim 3, **characterised in that** the second group of input commands consists of input commands such as changing the volume control of a multimedia system, changing the radio station or controlling the temperature of an air-conditioning system.

## Revendications

1. Procédé pour commander un dispositif de commande d'un véhicule automobile avec au moins une unité d'affichage pour représenter des informations variables, selon lequel on vérifie au moyen d'une détection de regard si le regard de l'utilisateur est dirigé sur l'au moins une unité d'affichage et selon lequel on n'exécute pas une instruction d'entrée appartenant à un premier groupe d'instructions d'entrée lorsque le regard de l'utilisateur n'est pas dirigé sur l'au moins une unité d'affichage pendant un certain intervalle de temps pendant l'instruction d'entrée et on exécute l'instruction d'entrée appartenant à un deuxième groupe d'instructions d'entrée indépendamment de la détection de regard, **caractérisé en ce que** les instructions d'entrée sont données au moyen de gestes.

2. Procédé selon la revendication 1, **caractérisé en ce que** l'intervalle de temps pendant l'instruction d'entrée appartenant au premier groupe d'instructions d'entrée est compris entre 1 et 10 secondes.

3. Procédé selon l'une des revendications précédentes, **caractérisé en ce qu'**un système multimédia et/ou une installation de climatisation sont commandés avec le deuxième groupe d'instructions d'entrée.

4. Procédé selon la revendication 3, **caractérisé en ce que** le deuxième groupe d'instructions d'entrée est formé d'instructions d'entrée telles que le réglage de volume sonore pour un système multimédia, le changement d'émetteur radio ou le réglage de température d'une installation de climatisation.
